Europäisches Patentamt

(19) European Patent Office

Office européen des brevets

(11) Veröffentlichungsnummer: **0 040 409**
**B1**

(12) **EUROPÄISCHE PATENTSCHRIFT**

(45) Veröffentlichungstag der Patentschrift:
14.11.84

(51) Int. Cl.³: **H 02 B 15/04**

(21) Anmeldenummer: 81103724.1

(22) Anmeldetag: 14.05.81

(54) **Mosaiktafel mit geschlossener Frontseite.**

(30) Priorität: 21.05.80 DE 3019440
04.12.80 DE 3045793

(43) Veröffentlichungstag der Anmeldung:
25.11.81 Patentblatt 81/47

(45) Bekanntmachung des Hinweises auf die Patenterteilung:
14.11.84 Patentblatt 84/46

(84) Benannte Vertragsstaaten:
AT CH FR IT LI SE

(56) Entgegenhaltungen:
CH - A - 590 568
DE - A - 1 537 598
DE - U - 1 896 167
FR - A - 1 590 195
FR - A - 2 096 289
FR - A - 2 301 944
FR - A - 2 308 219
FR - A - 2 316 679

(73) Patentinhaber: **Siemens Aktiengesellschaft, Berlin und München Wittelsbacherplatz 2, D-8000 München 2 (DE)**

(72) Erfinder: **Maier, Georg, Neue Bergstrasse 11, D-8521 Weisendorf (DE)**

**Beschreibung**

Die Erfindung betrifft eine Mosaiktafel mit geschlossener Frontseite, wie sie im ersten Teil des Patentanspruchs 1 angegeben ist. Eine derartige Tafel ist aus der FR-A-1 590 195 bekannt.

Bei Mosaiktafeln mit geschlossener Frontseite, die aus einer Vielzahl von lückenlos nebeneinander angeordneten Mosaikbausteinen zur übersichtlichen Nachbildung von Schaltungsanlagen aufgebaut sind, sind die meisten Mosaikbausteine an ihren quadratischen Frontplatten ohne jegliche Symbole, sowie ein weiterer Teil mit Symbolen für Leitungsabschnitte, Leitungsverzweigungen, Transformatoren u.dgl. versehen, die die sogenannten Blindbausteine bilden. Die in der realen Schaltanlage vorgesehenen aktiven Schaltungselemente, z.B. Schalter, Steuerstellen u.dgl. werden in der Mosaiktafel an den betreffenden Stellen durch mit Steuerschaltern, Meldeleuchten usw. bestückte sogenannte Aktivbausteine nachgebildet. Eine derartige Mosaiktafel soll bei Änderungen der Schaltanlage an diese angepasst werden können, wozu die entsprechenden Blind- und Aktivbausteine entnommen und an anderen Stellen der Mosaiktafel wieder angefügt und/oder zusätzliche solche Bausteine hinzugefügt werden.

Zur Halterung der quadratischen Frontplatten ohne bzw. mit Symbole aufweisenden Blindbausteine und der bestückten quadratischen Frontkonturen der Aktivbausteine hat man diese an gegenüberliegenden Seiten mit senkrecht nach hinten ragenden federnden Haltenasen versehen, die mit gesonderten Tragrastern aus einer Vielzahl von parallelen sich kreuzenden Schienen oder aus aneinander verschiebefest gehaltenen beidseitig offenen einheitlichen Tragkörpern von quadratischer Kontur lösbar verbindbar sind, indem die von vorne einfügbaren bzw. nach vorne herausnehmbaren Blind- und Aktivbausteine mit ihren Haltenasen Haltekanten an den Tragrastern hintergreifen.

Bei Verwendung von einheitlichen offenen Tragkörpern gemäss FR-A-2 096 289 für die Tragraster können nebeneinanderliegende Tragkörper entfernt werden, um an deren Stelle Messgeräte u.dgl. einfügen zu können, was bei Verwendung von Schienen nur mit Schwierigkeiten wegen der notwendigen Änderung derselben möglich ist. Für das Einfügen solcher Messgeräte o.dgl. sind an den freiliegenden Aussenflächen der Tragkörper geschlossene ebene Flächenteile anschiebbar, die mit ihren Stirnseiten Auflageflächen für die besagten Geräte bilden.

Dabei sind die einzelnen Tragkörper durch längskantenparallele Schraubbolzen zusammengehalten und zwei gegenüberliegende Seitenflächen der Tragkörper mit Durchbrechungen zur Bildung von Rastkanten für die Blindbausteine versehen. Die Aussenflächen der randseitigen Tragkörper sind mit angeschobenen und durch längskantenparallele Schraubbolzen gehaltene Randleisten zur Bildung eines Tragrahmens bestückt. Die einzelnen Tragkörper sind auf jeder Seitenfläche mit je einer hinterschnittenen längskantenparallelen Nut und einem hinterschnittenen längskantenparallelen Vorsprung versehen.

Anstelle durchgehender Schraubbolzen zum Zusammenhalten der einheitlichen Tragkörper können gemäss FR-A-2 301 944 auch auf die Ecken benachbarter einheitlicher Tragkörper aufgesetzte Klammern vorgesehen sein, wobei jeweils zwei gegenüberliegende Seitenwände der beidseitig offenen Tragkörper gegebenenfalls Quernuten bzw. Mittenvorsprünge aufweisen, die ein Verschieben der Tragkörper in Richtung der Längskanten verhindern. In den Ecken dieser Tragkörper sind Durchlässe mit Rastkanten für die entsprechend angeordneten federnden Haltenasen der gesonderten Blind- oder Aktivbausteine mit quadratischer Frontplatte bzw. Frontkontur vorgesehen.

Zum Zusammenhalten von beidseitig offenen Tragkörpern zweier unterschiedlicher Arten mit quadratischer Aussenkontur ist es aus der FR-A-2 316 679 bekannt, die Tragkörper der ersten Art an jeder Aussenfläche mit je zwei sich über einen Teil deren Länge erstreckenden kantenparallelen, hinterschnittenen Halteleisten und die Tragkörper der zweiten Art entsprechend mit je zwei kantenparallelen hinterschnittenen Haltenuten zu versehen, so dass die unterschiedlichen Tragkörper frontseitig bündig aneinandergeschoben gehalten sind und unterseitig an den Ecken gegen Längsverschiebung gesichert miteinander verbunden werden. An den Innenseiten sind Querleisten mit Rastkanten für die Haltenasen von vorderseitig angefügten Blindbausteinen vorgesehen.

Bei allen vorgenannten Ausführungsformen müssen zuerst die Tragraster durch Aneinanderfügen und Verbinden der einzelnen Tragkörper unter Verwendung gesonderter Mittel, wie Schraubbolzen, Klammern usw. gebildet werden, um danach durch Einfügen der einschnappbaren Blind- und Aktivbausteine die frontseitig geschlossene Mosaiktafel mit der gewünschten Nachbildungskonfiguration zu vervollständigen. Es sind dabei also zwei gesonderte Arbeitsgänge notwendig. Die Erweiterung bzw. Abänderung der Mosaiktafel ist durch weiteres Anfügen von Tragkörpern und Bausteinen und/oder durch Umplazieren von Bausteinen zu bewerkstelligen, wobei die Bausteine von vorne her einfügbar bzw. nach vorne hin entnehmbar sind.

Aus der FR-A-1 590 195 ist es für Mosaiktafeln mit Blindbausteinen bekannt, ohne gesonderte Tragraster auszukommen und hierzu Tragkörper von quadratischer Kontur mit angeformten quadratischen Frontplatten als Blindbausteine zu verwenden. Es sind dabei zwei unterschiedliche Arten solcher Blindbausteine vorgesehen, von denen die erste Art an allen rechteckförmigen Seitenwänden je eine längskantenparallele hinterschnittene Halteleiste aufweist und in den Halteleisten an nur zwei gegenüberliegenden Seitenwänden an deren Unterkanten endende federnde Rastnasen vorgesehen sind. Die angeformte quadratische Frontplatte bei der ersten Art überragt die Seitenwände und begrenzt die Halteleisten zur Vorderseite. Die Blindbausteine der zweiten Art haben an allen rechteckförmigen Seitenwänden je eine hinterschnittene kantenparallele durchgehende Haltenut und eine von den Seitenwänden zurückgesetzte quadratische Frontplatte. An den Unterkanten aller Haltenuten sind Randausnehmungen mit Rastkanten für die Rastnasen der Blindbausteine der ersten Art vorgesehen. Somit können die unterschiedlichen Blindbausteine frontseitig fluchtend ohne zusätzliche Haltemittel aneinander in Schnappverbindung gehalten werden.

Auch bei der Mosaiktafel nach der DE-U-1 896 167 werden Bausteine zweier unterschiedlicher Arten verwendet, zu deren Verbindung jedoch an der Hinterseite anbringbare, gesonderte, schraubbare Haltemittel notwendig sind, so dass Aktivbausteine mit federnden Haltenasen nicht verwendbar wären. Vielmehr müssen Aktivbausteine verwendet werden, die ebenso wie die Blindbausteine der zweiten Art an allen vier rückseitigen Ecken Gewindebolzen tragen und an allen vier Seitenwänden zur Frontplattenkante parallele hinterschnittene Ausnehmungen aufweisen, die mit entsprechend angeordneten hinterschnittenen Vorsprüngen an allen Seitenwänden der Blindbausteine der ersten Art bei fluchtenden Frontseiten in Eingriff gebracht sind. Diese Blindbausteine stützen sich eckseitig an Verbindungsstücken ab, die an den Gewindebolzen jeweils benachbarter Blindbausteine der zweiten Art angeschraubt sind.

Der Erfindung liegt die Aufgabe zugrunde, bei Mosaiktafeln der eingangs genannten Art die Detailgestaltung der Blindbausteine und des Zubehörs zu verbessern, derart, dass alle Frontplatten gleich gross gestaltet sein können, dass Aktivbausteine mit rückseitig angeordneten federnden Haltenasen anstelle beliebiger Blindbausteine sehr einfach von vorne einzufügen und nach vorne herausnehmbar sind und dass alle Bausteine um 90, 180, 270 oder 360° gegeneinander verdreht, lösbar gerastet aneinander befestigt sind.

Diese Aufgabe wird durch die im kennzeichnenden Teil des Patentanspruchs 1 angegebenen Erfindung gelöst.

Auf einen gesonderten Rahmen für die tragrasterlose Mosaiktafel kann verzichtet werden, wenn an ihrer Unterseite Haltebausteine und Haltebügel vorgesehen werden gemäss den Patentansprüchen 2 und 3. Wenn aber diese rückseitige Halterung an Gestellen durch die besagten Mittel nicht vorgesehen und stattdessen die randseitige Halterung der Mosaiktafel in Ausnehmungen von tragenden Flächen erfolgen soll, ist dies nach einer vorteilhaften Ausgestaltung der Erfindung dadurch möglich, das an die Seitenwände der einzelnen Blindbausteine angepasste und an diesen lösbar in einer Endlage gehaltene Rahmenbausteine, die in Höhe der Frontwände der Blindbausteine an ihren Oberkanten abgewinkelte Rahmenteile tragen, vorgesehen sind, die zusammen einen durchgehend umlaufenden Tragrahmen für die in eine passende Wandausnehmung einsenkbare Mosaiktafel bilden.

Die an die aussenliegenden Seitenwände der Blindbausteine von abwechselnd erster und zweiter Art anbringbaren Rahmenbausteine werden von unten her eingefügt und im Schiebesitz an den Blindbausteinen lückenlos aneinanderliegend in einer Endlage gehalten, so dass die Oberkanten aller Rahmenbausteine mit ihren abgewinkelten Rahmenteilen in einer Ebene liegen.

Zur Fixierung der Endlage haben die Rahmenbausteine an ihrer Unterkanten eine in Höhe der Rückseite des betreffenden Blindbausteines nach innen abgewinkelte Tragfläche, auf der der betreffende Blindbaustein aufliegt. Die Ecken der Tragflächen sind um 45° abgeschrägt, damit die in den Ecken der Mosaiktafel aneinandergrenzenden Rahmenbausteine an die betreffenden Blindbausteine aufgeschoben werden können. Die Innenflächen der Rahmenbausteine haben in Eingriff mit der Seitenwand des betreffenden Blindbausteines bringbare Befestigungsmittel. Dabei sind die an Blindbausteine der ersten Art anbringbaren Rahmenbausteine auf ihrer Innenseite mit mindestens einer in passenden Eingriff mit deren Halteleisten bringbaren Ausnehmung und die mit den Haltenuten der Blindbausteine der zweiten Art verbindbaren Rahmenbausteine mit entsprechenden Führungsleisten versehen.

Statt der hierbei notwendigen zwei Arten von Rahmenbausteinen kann gemäss einer besonders vorteilhaften Ausgestaltung ein für beide Blindbausteine verwendbarer Rahmenbaustein erhalten werden, wenn seine Innenfläche eine zur Aufnahme der Halteleisten dienende Mulde sowie einen hinter die Durchbrechung der Blindbausteine ragenden Haltewinkel aufweist.

Um eine Verbindung der an den Ecken liegenden Rahmenbausteine miteinander und eine eckseitige Abdeckung der die Mosaiktafel aufnehmenden Ausnehmung zu erzielen, sind noch Rahmeneckteile mit an ihren im rechten Winkel stehenden Seitenwänden vorspringenden Zapfen vorgesehen, welche Zapfen in Ausnehmungen an den Stirn- und Unterseiten der Rahmenteile der Rahmenbausteine passend einfügbar sind und so die Rahmeneckteile halten. Auf diese Weise ist eine mit vorspringenden umlaufenden Rahmen versehene Mosaiktafel geschaffen, deren Einzelteile ausschliesslich aneinander gehalten werden, wobei der Rahmen auf den Randbereichen der Ausnehmung aufliegt. Der auch an den Ecken gefüllte Rahmen kann auch durch an einen Rahmenbaustein angeformtes Eckteil erreicht werden, der über diesen Rahmenteil seitlich vorragt.

Einige Ausführungsbeispiele der Erfindung sind anhand der Zeichnung nachfolgend näher erläutert.

Es zeigen

Fig. 1 eine Draufsicht auf einen Teil einer schematisch angedeuteten Mosaiktafel aus Blindbausteinen nach der Erfindung und eingefügten bekannten Aktivbausteinen,

Fig. 2 einen Längsschnitt durch einen Teil der Mosaiktafel nach Fig. 1 mit Blindbausteinen der beiden Arten und einem herausgenommen angedeuteten Aktivbaustein,

Fig. 3 bis 10 perspektivische Darstellungen der Blindbausteine beider Arten und der ihnen zugeordneten Füllstücke beider Arten sowie von Haltebausteinen und Haltebügeln im unterseitigen Bereich der Mosaiktafel,

Fig. 11 bis 13 verschiedene Ausführungen der Rahmenbausteine in perspektivischer Darstellung,

Fig. 14 eine Draufsicht auf einen Eckenabschnitt des Rahmens der Mosaiktafel unter Fortlassung der zugehörigen Blindbausteine mit einem Rahmeneckteil und

Fig. 15 ein Rahmeneckteil in Seitenansicht,

Fig. 16 einen Rahmenbaustein mit angeformten Eckteil.

Die Mosaiktafel besteht aus schachtbrettartig angeordneten, aneinander formschlüssig gehaltenen Blindbausteinen 1 und 2 der ersten und zweiten Art mit Ausnahme der für das Einstecken von Aktivbausteinen 3 in durch Entnahme jeweils eines der Blindbausteine gebildeten Aufnahmeräume. Bei Entnahme eines Blindbausteines 1 der ersten Art bildet sich jeweils ein von Seitenwänden 2A von jeweils vier Blindbausteinen 2 der zweiten Art begrenzter Aufnahmeraum, bei Entnahme eines Blindbausteines 2 der zweiten Art ein von Seitenwänden 1A von jeweils vier Blindbausteinen 1 der ersten Art begrenzter Aufnahmeraum, wobei die jeweils freien Seitenwände 1A bzw. 2A durch Füllstücke 4 bzw. 5 geebnet sind und diese Füllstücke Auflageflächen für die Unterseite der Frontplatte 3A des einzusetzenden Aktivbausteines 3 bilden.

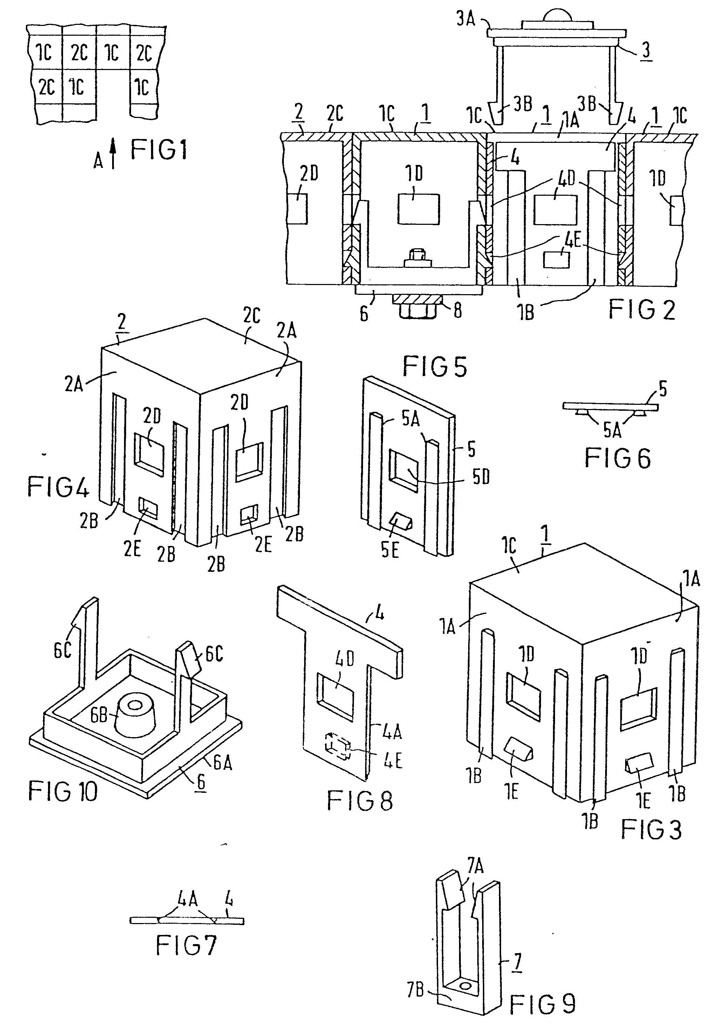

Gemäss Fig. 3 weisen die rückseitig offenen hohlen Blindbausteine 1 der ersten Art eine quadratische Frontseite 1C und rechteckförmige Seitenwände 1A auf, an denen jeweils zwei kantenparallele hinterschnittene Halteleisten 1B angeformt sind. Zwischen den Halteleisten 1B jeder Seitenwand 1A ist eine rechteckförmige Durchbrechung 1D zur Bildung einer Haltekante für eine in sie von aussen her eingreifende federnde Haltenase 3B eines Aktivbausteines 3 oder eines Haltebausteines 6 und darunter eine der offenen Rückseite benachbarte Rastnase 1E angeordnet.

Gemäss Fig. 4 ist der ebenfalls rückseitig offene Blindbaustein 2 der zweiten Art mit quadratischer Frontseite 2C an seinen rechteckförmigen Seitenwänden 2A mit je zwei kantenparallelen, von der Rückseite beginnenden und mit Abstand von der Frontseite 1C endenden hinterschnittenen Haltenuten 2B zur Aufnahme der Halteleisten 1B versehen. Zwischen den Haltenuten 2B sind ebenfalls zur Bildung von Haltekanten für die Haltenasen 3B eines Aktivbausteines 3 in gleicher Höhe wie beim Blindbaustein 1 rechteckförmige Durchbrechungen 2D zur Bildung von Haltekanten für die Haltenasen vorgesehen und darunter in Höhe der Rastnasen 1E Nischen zur Bildung von Rastkanten 2E für die Rastnasen vorgesehen. Somit können diese Blindbausteine 1 und aneinander lösbar gehalten und zur Bildung rastloser Mosaiktafeln verwendet werden. So dass die Frontseiten 1C und 2C in einer Ebene oder wegen der Nachgiebigkeit der Seitenwände 1A, 2A in einer leicht gewölbten Fläche liegen.

Die Anbringung von Aktivbausteinen 3 nach Fig. 2, z.B. anstelle eines entnommenen Blindbausteines 2, erfordert die Einfügung von T-förmigen Füllstücken 4 der ersten Art nach Fig. 7, 8 an mindestens zwei gegenüberliegenden Seitenwänden 1A zwischen den Halteleisten 1B, um Auflageflächen für die Frontplatte 3A des Aktivbausteines 3 zu erhalten. Hierzu sind die T-förmigen Füllstücke 4 mit ihren abgeschrägten Seitenkanten 4A des Mittelteiles zwischen die hinterschnittenen Halteleisten 1A von der Frontseite her eingeschoben bis zum Anschlag des Querteils des Füllstückes 4, der entsprechend der Wandstärke der Frontplatte 3A des Aktivbausteines 3 niedriger als der Abstand der Halteleisten von der Frontseite bemessen ist. Der Aktivbaustein 3 ragt mit seinen federnden Haltenasen 3B durch die Durchbrechungen 4D und 1D und rastet an deren Oberkanten ein.

Bei Anbringung eines Aktivbausteines 3 in den durch Entfernen eines Blindbausteines 1 gebildeten Freiräumen müssen die Seitenwände 24 der Blindbausteine 2 durch Füllstücke 5 der zweiten Art geebnet und mit Auflageflächen für die Frontplatte 3A des Aktivbausteines 3 versehen werden. Hierzu sind an mindestens zwei gegenüberliegenden Seitenwänden 2A von der offenen Rückseite her Füllstücke 5 der zweiten Art nach Fig. 5 und 6 eingeschoben zu denken, wozu die hinterschnittenen Leisten 5A in die Haltenuten 2B bis zum Anschlag eingeschoben werden, so dass die Oberkante der Füllstücke 5 Auflageflächen bilden. Die Füllstücke 4 und 5 sind durch ihre Rastkanten 4E und Rastnasen 5E lösbar mit den Rastnasen 1E der Blindbausteine 1 bzw. mit den Rastkanten 2E der Blindbausteine 2 verbunden.

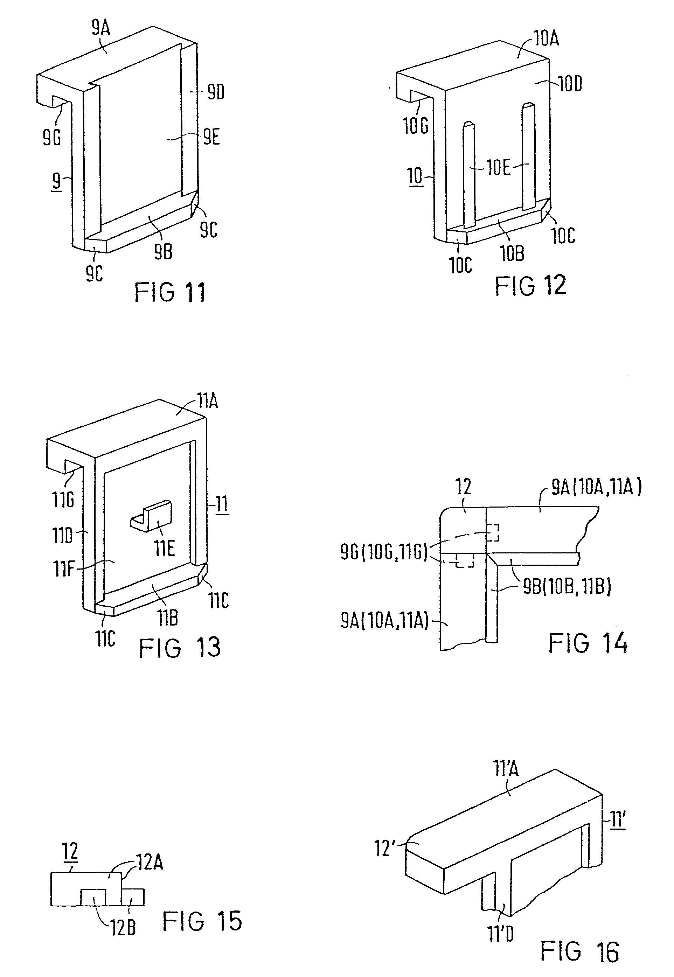

Zur Befestigung der Mosaiktafel an einer in Fig. 2 angedeuteten Tragekonstruktion 8 sind mit dieser Haltebausteine 6 gemäss Fig. 10 verschraubt, die von den Rückseiten der Hohlbausteine 1 bzw. 2 in deren gegenüberliegende Durchbrechungen 1D, 2D rastend eingreifen. Die Haltebausteine 6 haben eine die Rückseite der Hohlbausteine abschliessende und an deren Unterkanten anliegende Bodenplatte 6A mit angrenzendem Rahmen, aus dem zwei elastisch nachgiebige Haltenasen 6C ragen. Mittig trägt die Bodenplatte 6A eine Gewindeführung 6B.

Zum gemeinsamen Halten und Verlegen von Anschlussleitungen, Abdeckungen und dergleichen für die Aktivbausteine dienen Haltebügel 7 nach Fig. 9, die die benachbarten Seitenwände zweier Blindbausteine von unten her umfassen und mit ihren an elastisch nachgiebigen Haltenasen 7A in die Durchbrechungen 2D bzw. 1D lösbar rastend ragen. An den Mittelsteg 7B sind die besagten Teile anschraubbar.

Anstelle der Rastnasen 1E können auch in Nischen liegende Rastkanten bzw. anstelle der Rastkanten 2E auch Rastnasen vorgesehen werden, wenn bei den Füllstücken eine entsprechende Vertauschung von Rastkanten und Rastnasen erfolgt.

Bei Halterung über einen Rahmen werden zur Bildung des Rahmens auf die Seitenwände 1A von unten her Rahmenbausteine 9 (Fig. 11) und auf die Seitenwände 2A Rahmenbausteine 10 (Fig. 12) aufgeschoben, bis deren nach innen vorspringende Tragfläche 9B bzw. 10B mit 45° abgeschrägten Ecken 9C, 10C an der Rückseite der Seitenwand 1A bzw. 2A anliegt. Die Innenfläche 9D des Rahmenbausteines 9 hat eine Ausnehmung 9E von einer der Höhe der Halteleisten 1B entsprechenden Tiefe und einer Breite an den hinterschnittenen Seitenflächen, die dem Abstand der einander abgewandten hinterschnittenen Seitenflächen der Halteleisten 1B entspricht. Die Höhe dieser Ausnehmung muss bis zur Oberkante des Rahmenbausteines reichen, an der ein nach aussen abgewinkelter Rahmenteil 9A vorgesehen ist, der an seinen Stirn- und Unterseiten zwei Ausnehmungen 9C aufweist. Der für den Blindbaustein 2 vorgesehene Rahmenbaustein 10 hat an seiner Innenfläche 10D zwei in die Haltenuten 2B passende Führungsleisten 10E, die von der Tragfläche 10B beginnen und höchstens gleiche Länge wie die Haltenuten 2B haben. Auch dieser Rahmenbaustein 10 weist einen nach aussen abgewinkelten Rahmenteil 10A mit Ausnehmungen 10G auf. Die Aussenabmessungen beider Rahmenbausteine 9 und 10 sind gleich und bedecken die Seitenwände der Blindbausteine völlig.

In Fig. 13 ist ein einheitlicher Rahmenbaustein 11 für beide Blindbausteine 1 und 2 gezeigt, der eine Tragfläche 11B mit 45° abgeschrägten Ecken 11C, einen Rahmenteil 11A mit Ausnehmungen 11G sowie eine innerhalb der Innenfläche 11D liegende Mulde 11F für die Aufnahme der Halteleisten 1B besitzt. Innerhalb der Mulde ist ein über die Innenfläche vorragender Haltewinkel 11E vorgesehen, der durch die Durchbrechung 1D bzw. 2D der Blindbausteine 1, 2 ragt und an der Innenfläche der Seitenwand 1A bzw. 2A anliegt. Die Höhe des Haltewinkels ist hierzu kleiner als die Höhe der Durchbrechung bemessen. Der Haltewinkel ist so angeordnet, dass er bei anliegender Tragfläche 11B an der Rückseite des Blindbausteines mit der Innenfläche der Seitenwand in Eingriff steht.

Die freien Enden des Rahmens werden durch Rahmeneckteile 12 gemäss Fig. 14, 15 ergänzt. Diese haben an ihren im rechten Winkel stehenden Seitenwänden 12A vorstehende Zapfen 12B, die von unten her in die Ausnehmungen 9G, 10G bzw. 11G passend eingefügt sind.

Gemäss Fig. 16 kann der gesonderte Rahmeneckteil durch einen am Rahmenteil 11'A des nur im Eckbereich verwendbaren Rahmenbausteines 11' angeformten, seitlich vorragenden Eckteil 12' ersetzt werden. Dieser Eckteil kann auch bei Rahmenbausteinen gemäss Fig. 11 und 12 vorgesehen sein. Bei Verwendung eines solchen Eckrahmenbausteines können in den anderen Rahmenbausteinen nach Fig. 11, 12 oder 13 die Ausnehmungen 9G, 10G bzw. 11G entfallen.

## Patentansprüche

1. Eine geschlossene Frontseite aufweisende Mosaiktafel, die tragrasterlos aus lösbar eng aneinandergereihten Blindbausteinen (1, 2) zweier unterschiedlicher Arten in abwechselnder Anordnung gebildet ist, die sich ohne zusätzliche Befestigungsmittel gegenseitig haltern, wobei die Blindbausteine (1, 2) angeformte, quadratische Frontplatten (1C, 2C) aufweisen und rückseitig offen sind und wobei die Blindbausteine (1) der ersten Art an allen Seitenwänden (1A) senkrecht zur Frontplatte (1C) verlaufende, angeformte beidseitig hinterschnittene Halteleisten (1B) und die Blindbausteine (2) der zweiten Art an allen Seitenwänden (2A) entsprechende Haltenuten (2B) haben und die Halteleisten (1B) in die Haltenuten (2B) bis zu einem Anschlag einschiebbar sind, derart, dass sich eine fluchtende Lage der Frontplatten (1C, 2C) ergibt, und wobei an allen Seitenwänden (2A) der Blindbausteine (2) mit Haltenuten (2B) versenkte, frontparallele Rastkanten (2E) und an Seitenwänden (1A) der Blindbausteine (1) mit Halteleisten (1B) in die genannten Rastkanten (2E) lösbar einrastende Rastnasen (1E) vorgesehen sind, gekennzeichnet durch folgende Ausgestaltung:

die Blindbausteine (1, 2) weisen an jeder Seitenwand (1A, 1B) jeweils zwei hinterschnittene Halteleisten (1B) bzw. Haltenuten (2B) auf, zwischen denen die Rastnasen (1E) bzw. Rastkanten (2E) liegen,

zur Bildung des die gegenseitige Verschiebung der Blindbausteine (1, 2) begrenzenden Anschlages enden die Halteleisten (1B) bzw. Haltenuten (2B) jeweils im gleichen Abstand von der betreffenden Frontplatte (1C, 2C), die Frontplatten (1C, 2C) sind alle gleich gross und überragen die Seitenwände (1A, 2A) nicht,

Rastnasen (1E) sind an allen Seitenwänden (1A) der Blindbausteine (1) der ersten Art vorgesehen,

an gleichen Stellen in allen Seitenwänden (1A, 2A) zwischen den Halteleisten bzw. Haltenuten (1B, 2B) sind rechteckförmige Durchbrechungen (1D, 2D) mit frontparallelen Haltekanten angeordnet für federnde Haltenasen (3B), die rückseitig an gegenüberliegenden Seiten der quadratischen Frontflächen (3A) von anstelle von Blindbausteinen (1, 2) von vorn in die Mosaiktafel einsetzbaren Aktivbausteinen (3) senkrecht vorragen,

bei entfernten Blindbausteinen (1, 2) sind die jeweils freien Seitenwände (1A, 2A) der benachbarten Blindbausteine ebnende und zur Frontplatte (1C, 2C) parallel beabstandete Auflageflächen für die Rückseite der Frontfläche (3A) eines einzufügenden Aktivbausteines (3) bildende Füllstücke (4, 5) einsetzbar, die als zwischen jeweils beide Halteleisten (1B) einer Seitenwand (1A) der Blindbausteine (1) der ersten Art frontseitig einschiebbare T-förmige flache Füllstücke (4) mit schrägen Seitenkanten (4A) einer ersten Art bzw. als in die Haltenuten (2B) einer Seitenwand (2A) der Blindbausteine (2) der zweiten Art von der Rückseite her einschiebbare, angeformte hinterschnittene Leisten (5A) aufweisende Füllstücke (5) einer zweiten Art ausgebildet sind, und jedes der Füllstücke (4, 5) weist jeweils an gleichen Stellen wie die Seitenwände (1A, 2A) des Blindbausteines (1, 2) entsprechende rechteckförmige Durchbrechungen (4D, 5D) mit frontparallelen Haltekanten für die Haltenasen (3B) der Aktivbausteine (3) und ausserdem die Füllstücke (4) der ersten Art versenkte Rastkanten (4E), bzw. die Füllstücke (5) der zweiten Art vorragende Rastnasen (5E) für den Eingriff mit den Rastnasen (1E) bzw. Rastkanten (2E) in den Seitenwänden (1A, 2A) der entsprechenden Blindbausteine (1, 2) auf.

2. Mosaiktafel nach Anspruch 1, dadurch gekennzeichnet, dass zum punktuellen unterseitigen Lagern der zu einer Mosaiktafel zusammengefügten Blind- und Aktivbausteine (1, 2, 3) in die offenen Unterseiten der Blindbausteine (1, 2) bzw. der mit Füllstücken (4, 5) geebneten frontseitig mit Aktivbausteinen (3) belegten Lücken einsetzbare gesonderte Haltebausteine (6) vorgesehen sind, die eine sich an den Unterkanten der Seitenwände (1A, 2A) der Blindbausteine (1, 2) abstützende Bodenplatte (6A) mit einer mittigen Gewindeführung (6B) für eine Befestigungsschraube und mit an zwei gegenüberliegenden Seiten vorragenden nachgiebigen Haltenasen (6C) für den Eingriff in die Haltekanten der rechteckförmigen Durchbrechungen (1D, 2D) der Blindbausteine (1, 2) aufweisen.

3. Mosaiktafel nach Anspruch 1, dadurch gekennzeichnet, dass zur unterseitigen Halterung von Leitungen und anderen Teilen der aktiven Bausteine, Abdeckungen und dergleichen in die Durchbrechungen (1D, 2D) von aneinanderliegenden Seitenwänden (1A, 2A) benachbarter Blindbausteine oder einer mit einem Füllstück (4, 5) belegten Seitenwand einrastende U-förmige Haltebügel (7) mit Haltenasen (7A) sowie mit einer in seinem Mittelsteg (7B) gehaltenen Befestigungsschraube vorgesehen sind.

4. Mosaiktafel nach Anspruch 1, dadurch gekennzeichnet, dass an die Seitenwände (1A, 2A) der Blindbausteine (1, 2) angepasste und an diesen lösbar in einer Endlage gehaltene Rahmenbausteine (9, 10, 11), die in Höhe der Frontwände (1C, 2C) der Blindbausteine an ihren Oberkanten abgewinkelte Rahmenteile (9A, 10A, 11A) tragen, vorgesehen sind, die zusammen einen durchgehend umlaufenden Tragrahmen für die in eine passende Wandausnehmung einsenkbare Mosaiktafel bilden.

5. Mosaiktafel nach Anspruch 4, dadurch gekennzeichnet, dass der Rahmenbaustein an seiner Unterkante eine in Höhe der Rückseite des Blindbausteines (1, 2) nach innen abgewinkelte Tragfläche (9B, 10B, 11B) mit 45° abgeschrägten Ecken (9C, 10C, 11C) und an seiner Innenfläche (9D, 10D, 11D) in Eingriff mit der Seitenwand (1A, 2A) bringbare Befestigungsmittel (9E, 10E, 11E) aufweist.

6. Mosaiktafel nach Anspruch 1 und 4, dadurch gekennzeichnet, dass der Rahmenbaustein für einen Blindbaustein erster Art an seiner Innenfläche (9D) mindestens eine von der Tragfläche (9B) bis zur Oberkante reichenden Ausnehmung (9E) für die Haltenuten (1B) des Blindbausteines (1) aufweist.

7. Mosaiktafel nach Anspruch 6, dadurch gekennzeichnet, dass der Rahmenbaustein für einen Blindbaustein zweiter Art an seiner Innenfläche (10D) zwei von der Tragfläche (10B) ausgehende in die Haltenuten (2B) des Blindbausteines (2) passende und von höchstens gleicher Länge wie diese bemessene Führungsleisten (10E) aufweist.

8. Mosaiktafel nach Anspruch 6, dadurch gekennzeichnet, dass der Rahmenbaustein für beide Arten von Blindbausteinen an seiner Innenfläche (11D) mindestens eine für die Aufnahme der Halteleisten (1B) des Blindbausteines (1) erster Art dienende Mulde (11F) sowie einen hinter die Durchbrechung (1D, 2D) des Blindbausteines (1, 2) ragende Haltewinkel (11E) aufweist.

9. Mosaiktafel nach Anspruch 4, dadurch gekennzeichnet, dass jeder Rahmenteil (9A, 10A, 11A) an seinen Stirn- und Unterseiten zwei Ausnehmungen (9G, 10G, 11G) aufweist, in die Zapfen (12B) an den Seitenwänden (12A) von Rahmeneckteilen (12) passend einfügbar sind.

10. Mosaiktafel nach Anspruch 6, 7 oder 8, dadurch gekennzeichnet, dass der Rahmenbaustein (11') mit einem an einer Seite des Rahmenteiles (11'A) vorragenden angeformten Eckteil (12') versehen ist.

**Claims**

1. A mosaic board with a closed front face, formed without a bearing grid from blank modules (1, 2) of two different types in an alternating arrangement lined up closely to one another so as to be detachable, which modules mutually support one another without the use of additional fixing means, where the blank modules (1, 2) possess moulded-on square front plates (1C, 2C) and are open at the rear, and where the blank modules (1) of the first type possess on all the side walls (1A) moulded-on support strips (1B) which run at right angles to the front plate (1C) and are undercut on both sides, and the blank modules (2) of the second type possess on all the side walls (2A) corresponding support grooves (2B), and the support strips (1B) can be inserted into the support grooves (2B) until a stop means is reached, in such manner as to produce an aligned position of the front plates (1C, 2C), and where all the side walls (2A) of the blank modules (2) having support grooves (2B) are provided with lowered, front-parallel engaging edges (2E), and the side walls (1A) of the blank modules (1) having support strips (1B) are provided with engaging lugs which detachably engage the aforementioned engaging edges (2E), characterised by the following design:

on each side wall (1A, 1B) the blank modules (1, 2) each possess two undercut support strips (1B) or support grooves (2B), as the case may be, between which are arranged the engaging lugs (1E)

or the engaging edges (2E) respectively, as the case may be,

the stop means which delimits the mutual displacement of the blank modules (1, 2) is formed in that the support strips (1B) or support grooves (2B), as the case may be, each terminate at the same distance from the related front plate (1C, 2C),

the front plates (1C, 2C) are all equal in size and do not project beyond the side walls (1A, 2A),

engaging lugs are provided on all the side walls (1A) of the blank modules (1) of the first type,

at identical locations in all the side walls (1A, 2A) between the support strips or support grooves (1B, 2B), as the case may be, rectangular openings (1D, 2D) having front-parallel support edges are provided for elastic support lugs (3B) which project at right angles at the rear at opposite sides of the square front surfaces (3A) of active modules (3) which can be inserted from the front into the mosaic board in place of blank modules (1, 2),

when the blank modules (1, 2) are removed, filler components (4, 5) can be inserted which serve to level the free side walls (1A, 2A) of the adjacent blank modules and which form bearing surfaces, arranged at parallel intervals from the front plate (1C, 2C), for the rear of the front face (3A) of an active module (3) which is to be inserted, which filler components are designed as T-shaped flat filler components (4) with oblique side edges (4A) of a first type which can be inserted at the front side between the two support strips (1B) of a side wall (1A) of the blank modules (1) of the first type, or else are designed as filler components (5) of a second type which can be inserted into the support grooves (2B) of a side wall (2A) of the blank modules (2) of the second type from the rear and which possess moulded-on, undercut strips (5A),

and each of the filler components (4, 5) possesses, at the same locations as the side walls (1A, 2A) of the blank module (1, 2), corresponding rectangular openings (4D, 5D) with front-parallel support edges for the support lugs (3B) of the active modules (3), and the filler components (4) of the first type possess lowered engaging edges (4E), whereas the filler components (5) of the second type possess projecting engaging lugs (5E) for engagement with the engaging lugs (1E) or engaging edges (2E) respectively, as the case may be, in the side walls (1A, 2A) of the corresponding blank modules (1, 2).

2. A mosaic board as claimed in Claim 1, characterised in that for point-focal under bearing of the blank and active modules (1, 2, 3) which are assembled to form a mosaic board, special support modules (6) are provided which can be inserted into the open under sides of the blank modules (1, 2) and the gaps which have been levelled by filler components (4, 5), as the case may be, and are provided on the front side with active modules (3), which support modules each possess a base plate (6A) which rests on the under edges of the side walls (1A, 2A) of the blank modules (1, 2), with a central threaded guide (6B) for a fixing screw and with elastic support lugs (6C) which project on to opposite sides for engagement into the support edges of the rectangular openings (1D, 2D) of the blank modules (1, 2).

3. A mosaic board as claimed in Claim 1, characterised in that for support underneath of conductors and other components of the active modules, covers and the like, U-shaped support brackets (7) which engage into the openings (1D, 2D) of mutually-abutting side walls (1A, 2A) of adjacent blank modules or of a side wall which is provided with a filler component (4, 5), are each provided with support lugs (7A) and with a fixing screw which is supported in its central arm (7B).

4. A mosaic board as claimed in Claim 1, characterised in that frame modules (9, 10, 11) are provided which are adapted to the side walls (1A, 2A) of the blank modules (1, 2) on which they are detachably supported in an end position, and which modules bear, at the level of the front walls (1C, 2C) of the blank modules, frame components (9A, 10A, 11A) which are angled at their upper edges and which together form a continuous support frame for the mosaic board which can be lowered into a suitable wall recess.

5. A mosaic board as claimed in Claim 4, characterised in that at its lower edge the frame module possesses a bearing surface (9B, 10B, 11B) which is angled towards the interior at the level of the rear side of the blank module (1, 2) with 45° bevelled corners (9C, 10C, 11C) and on its inner surface (9D, 10D, 11D) possesses attachment means (9E, 10E, 11E) which can be brought into engagement with the side wall (1A, 2A).

6. A mosaic board as claimed in Claim 1 and 4, characterised in that the frame module for a blank module of the first type possesses on its inner surface (9D) at least one recess (9E) for the support grooves (1B) of the blank module (1), which recess extends from the bearing surface (9B) to the upper edge.

7. A mosaic board as claimed in Claim 6, characterised in that the frame module for a blank module of the second type possesses on its inner surface (10D) two guide strips (10E) which commence from the bearing surface (10B), fit into the support grooves (2B) of the blank module (2), and are at the maximum of equal length to these.

8. A mosaic board as claimed in Claim 6, characterised in that the frame module for both types of blank modules possesses on its inner surface (11D) at least one trough (11F) which serves to accommodate the support strips (1B) of the blank module (1) of the first type, and a support angle (11E) which projects behind the opening (1D, 2D) of the blank module (1, 2).

9. A mosaic board as claimed in Claim 4, characterised in that at its end and lower sides each frame component (9A, 10A, 11A) possesses two recesses (9G, 10G, 11G) into which pegs (12B) can be fitted adapted to the side walls (12A) of frame corner components (12).

10. A mosaic board as claimed in Claim 6, 7 or 8, characterised in that the frame module (11') is provided with a moulded-on corner component (12′) which projects on one side of the frame component (11′A).

## Revendications

1. Tableau mosaïque comportant une face frontale fermée et qui est formé, en l'absence de toute structure porteuse, par des modules fictifs (1, 2) de deux types différents, disposés de façon serrée les uns contre les autres d'une manière détachable et selon une disposition alternée et qui se soutiennent réciproquement sans moyens de fixation supplémentaires, et dans lequel les modules fictifs (1, 2) comportent des plaques frontales carrées (1C, 2C) réalisées par façonnage et ouvertes sur leur face arrière, les modules fictifs (1) du premier type possèdent des barrettes de maintien (1B) formées par façonnage en contre-dépouille des deux côtés et s'étendant perpendiculairement à la plaque frontale (1C) et les modules fictifs (2) du second type possèdent des rainures de maintien correspondantes (2B) sur toutes leurs parois latérales (2A), et les barrettes de maintien (1B) peuvent être insérées dans les rainures de maintien (2B) jusqu'à une butée de telle sorte que l'on obtient une position alignée des plaques frontales (1C, 2C), et dans lequel il est prévu des bords d'encliquetage (2E) situés en renfoncement et parallèles à la face frontale, sur toutes les parois latérales (2A) des modules fictifs (2) comportant des rainures de maintien (2B), et il est prévu des ergots d'encliquetage (1E) s'encliquetant d'une manière détachable sur lesdits bords d'encliquetage (2E), sur les parois latérales (1E) des modules fictifs (1) comportant des barrettes de maintien (B), caractérisé par l'agencement suivant:

les modules fictifs (1, 2) comportent, au niveau de chaque paroi latérale (1A, 1B), respectivement deux barrettes de maintien (1B) en contre-dépouille ou deux rainures de maintien (2B), entre lesquelles sont situés les ergots d'encliquetage (AE) ou les bords d'encliquetage (2E),

pour la formation de la butée limitant le déplacement réciproque des modules fictifs (1, 2), les barrettes de maintien (1b) ou les rainures de maintien (2B) se terminent respectivement à la même distance par rapport à la plaque frontale considérée (1C, 2C),

les plaques frontales (1C, 2C) possèdent toutes des tailles identiques et ne font pas saillie au-dessus des parois latérales (1A, 2A),

des ergots d'encliquetage (1E) sont prévus sur toutes les parois latérales (1A) des modules fictifs (1) du premier type,

aux mêmes emplacements et dans toutes les parois latérales (1A, 2A) et entre les barrettes de maintien ou les rainures de maintien (1B, 2B) se trouvent disposés des perçages rectangulaires (1D, 2D) possédant des bords de maintien parallèles à la face frontale et qui sont prévus pour des ergots élastiques de maintien (3B), qui, sur la face arrière et sur des côtés opposés de la surface frontale carrée (3A), font saillie perpendiculairement à partir de modules actifs (3) introduits par avance dans le tableau mosaïque à la place de modules fictifs (1, 2),

dans le cas de modules fictifs (1, 2) retirés, des surfaces d'appui, qui réalisent un aplanissement des parois latérales respectivement libres (1A, 2A) des modules fictifs voisins et sont parallèles à la plaque frontale (1C, 2C) et en étant situées à distance, peuvent être utilisées pour des pièces de remplissage (4, 5) constituant la face arrière de la surface frontale (3A) d'un module actif (3) devant être inséré, et qui sont réalisées sous la forme de pièces de remplissage d'un premier type (4) plates et en forme de T, comportant des bords latéraux obliques (4A) et pouvant être insérées frontalement entre respectivement deux barrettes de maintien (1B) d'une paroi latérale (1A) des modules fictifs (1) du premier type, et sous la forme de pièces servant au remplissage (5) d'un second type pouvant être insérées dans les rainures de maintien (2B) d'une paroi latérale (2A) des modules fictifs (2) du second type à partir de la face arrière, et comportant des barrettes réalisées par façonnage en contre-dépouille (5A),

et chacune des pièces de remplissage (4, 5) comporte respectivement, aux mêmes emplacements que les parois latérales (1A, 2A) du module fictif (1, 2), des perçages rectangulaires correspondants (4D, 5D) comportant des bords de maintien parallèles à la face frontale pour les ergots de maintien (3B) des modules actifs (3), et en outre les pièces de remplissage (4) du premier type comportent des bords d'encliquetage (4E) en renfoncement et les pièces de remplissage (5) du second type comportent des ergots d'encliquetage saillants (5E), qui sont destinés à engrener respectivement avec les ergots d'encliquetage (1E) et avec les bords d'encliquetage (2E) situés dans les parois latérales (1A, 2A) des modules fictifs correspondants (1, 2).

2. Tableau mosaïque suivant la revendication 1, caractérisé par le fait que pour le soutien inférieur ponctuel des modules fictifs ou des modules actifs (1, 2, 3) réunis sous la forme d'un tableau mosaïque, il est prévu des modules de maintien particuliers (6) pouvant être insérés dans les faces inférieures ouvertes des modules fictifs (1, 2) ou des vides comblés avec les pièces de remplissage (4, 5) et occupés frontalement par des modules actifs (3), et qui comportent une plaque de base (6A), qui prend appui sur les bords inférieurs des parois latérales (1A, 2A) des modules fictifs (1, 2) et comportent un guide fileté central (6B) pour une vis de fixation et des ergots flexibles de maintien (6C) faisant saillie sur deux côtés opposés et destinés à venir en prise avec les bords de maintien des perçages rectangulaires (1D, 2D) des modules fictifs (1, 2).

3. Tableau mosaïque suivant la revendication 1, caractérisé par le fait que pour le soutien inférieur de conducteurs et d'autres pièces des modules actifs, d'éléments de revêtement et analogues, il est prévu des étriers de maintien en forme de U (7) s'engageant dans les perçages (1D, 2D) de parois latérales juxtaposées (1A, 2A) de modules fictifs voisins ou d'une paroi latérale oc-

**0 040 409**

cupée par une pièce de remplisssage (4, 5), et comportant des ergots de maintien (7A) ainsi qu'une vis de fixation maintenue dans la branche médiane (7B) de l'étrier.

4. Tableau mosaïque suivant la revendication 1, caractérisé par le fait que des modules formant cadres (9, 10, 11), qui sont adaptés aux parois latérales (1A, 2A) des modules fictifs (1, 2), sont maintenus de façon détachable dans une position finale sur ces parois et qui portent, à hauteur des parois frontales (1C, 2C) des modules fictifs, des parties de cadre (9A, 10A, 11A) rabattues sur leurs bords supérieurs et qui forment ensemble un cadre de support périphérique continu pour le tableau mosaïque pouvant être introduit en renfoncement dans un évidement adapté de la paroi.

5. Tableau mosaïque suivant la revendication 4, caractérisé par le fait que le module formant cadre comporte une surface d'appui (9B, 10B, 11B), rabattue vers l'intérieur à la hauteur de la face arrière du module fictif (1, 2) et comportant des angles biseauté à 45° (9C, 10C, 11C) et, sur la surface intérieure (9D, 10D, 11D), des moyens de fixation (9E, 10E, 11E) pouvant être amenés en contact avec la paroi latérale (1A, 2A).

6. Tableau mosaïque suivant les revendications 1 à 4, caractérisé par le fait que pour un module fictif du premer type, le module formant cadre comporte, sur sa face intérieure (9D), au moins un évidement (9E) s'étendant depuis la surface d'appui (9B) jusqu'au bord supérieur et prévu pour les rainures de maintien (1B) du module fictif (1).

7. Tableau mosaïque suivant la revendication 6, caractérisé par le fait que pour un module fictif d'un second type, le module formant cadre comporte, sur sa face intérieure (10D), deux barrettes de guidage (10E) partant de la surface d'appui (10B) et s'adaptant dans les rainures de maintien (2B) du module fictif (2) et dimensionnées de manière à présenter au maximum la même longueur que ces rainures.

8. Tableau mosaïque suivant la revendication 6, caractérisé par le fait que pour les deux types de modules fictifs, le module formant cadre comporte, sur sa face intérieure (11D), au moins un renfoncement (11F) servant à loger les barrettes de maintien (1B) du module fictif (1) du premier type, ainsi qu'une cornière de maintien (11E) faisant saillie en arrière du perçage (1D, 2D) du module fictif (1, 2).

9. Tableau mosaïque suivant la revendication 4, carctérisé par le fait que chaque élément de cadre (9A, 10A, 11A) comporte sur sa face frontale et sur sa face inférieure deux évidements (9G, 10G, 11G) dans lesquels peuvent être insérés de façon ajustée des tétons (12B) situés sur les parois latérales (12A) d'éléments d'angle de cadre (12).

10. Tableau mosaïque suivant la revendication 6, 7 ou 8, caractérisé en ce que le module formant cadre (11') est muni d'un élément d'angle (12') réalisé par façonnage et faisant saillie sur une face de l'élément de cadre (11'A).

0 040 409

A ↑ FIG 1

FIG 2

FIG 5

FIG 4

FIG 6

FIG 10

FIG 8

FIG 3

FIG 7

FIG 9

11

**FIG 11**

**FIG 12**

**FIG 13**

**FIG 14**

**FIG 15**

**FIG 16**